# EUROPÄISCHE PATENTSCHRIFT

(11) **EP 2 944 512 B1**
(45) Veröffentlichungstag und Bekanntmachung des Hinweises auf die Patenterteilung: **19.07.2017**
(21) Anmeldenummer: 15167121.1
(22) Anmeldetag: 11.05.2015
(51) Int. Cl.: B60P 1/54, G06Q 10/08

(54) **VERFAHREN ZUM ABLIEFERN UND/ODER ABHOLEN VON WENIGSTENS EINER SENDUNG**
METHOD FOR DELIVERING AND/OR COLLECTING AT LEAST ONE SHIPMENT
PROCÉDÉ DE LIVRAISON ET/OU DE RAMASSAGE D'AU MOINS UN ENVOI

(30) Priorität: 12.05.2014 DE 102014106689
(43) Veröffentlichungstag der Anmeldung: 18.11.2015
(73) Patentinhaber: Deutsche Post AG, 53113 Bonn (DE)
(72) Erfinder: Dr. Hempsch, Christoph, 53115 Bonn (DE); Meyer, Daniel, 53113 Bonn (DE); Dr. Salomon, Jörg, 53113 Bonn (DE); Shahed, Farhad, 50937 Köln (DE); Dr. Vogel, Thomas, 40589 Düsseldorf (DE)
(74) Vertreter: Cohausz & Florack

(56) Entgegenhaltungen:
- WO-A1-94/15812
- WO-A2-2011/106787
- FR-A1- 2 482 533
- FR-A1- 2 672 551
- NL-C2- 1 028 337
- US-A- 3 995 754

## Beschreibung

Die Erfindung betrifft ein Verfahren zum Abliefern und/oder Abholen von wenigstens einer Sendung.

Um Sendungen abzuliefern und/oder abzuholen sind unterschiedliche Konzepte bekannt, die sich beispielsweise in Bezug auf die Sendung unterscheiden können. Bei den Sendungen kann es sich grundsätzlich um unterschiedliche Gegenstände handeln, die vorzugsweise mit überschaubarem Aufwand transportiert werden können. Insbesondere können die Sendungen als Stückgut vorliegen. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können. Zudem kann eine Briefsendung neben einem Brief auch eine Postkarte sein.

Typischerweise werden diese Sendungen mit einem Fahrzeug über den öffentlichen Straßenverkehr transportiert und von einem Zusteller in den Briefkasten des Empfängers eingeworfen. Dabei ist der Zusteller beispielsweise ein Mitarbeiter eines Briefsendungen, Paketsendungen und/oder Flyer zustellenden Unternehmens, während der Empfänger ein Nutzer der von dem Unternehmen angebotenen Dienste ist und damit ein Kunde sein kann.

Um Paketsendungen abliefern zu können, muss der Zusteller in der Regel beim Empfänger klingeln und die Paketsendung persönlich an den Empfänger übergeben, weil die Briefkästen nicht zur Aufnahme von Packstücken geeignet sind. Wenn der Empfänger nicht angetroffen wird, besteht die Möglichkeit, die Paketsendung an einen Nachbarn zu übergeben oder in einer sogenannten Packstation abzulegen. Alternativ kann die Paketsendung zur Abholung in einer Filiale hinterlegt werden. Der Empfänger der Paketsendung erhält in diesem Falle eine Benachrichtigung, mit der der Empfänger sich die Paketsendung abholen kann. Wenn Paketsendungen versendet werden sollen, können diese entweder auf einer Filiale aufgegeben, von einem Mitarbeiter des Unternehmens beim Versender abgeholt oder vom Versender in einer Packstation hinterlegt werden. Transportiert werden die Paketsendungen dann beispielsweise über den öffentlichen Straßenverkehr zum Empfänger.

Bei anderen Sendungen als Briefsendungen, Paketsendungen und Flyern, stehen zur Ablieferung und/oder Abholung typischerweise weniger ausgereifte Konzepte zur Verfügung. Meist wird für solche Sendungen daher die direkte Übergabe von Person zu Person praktiziert.

Die bestehenden Verfahren zum Abliefern und/oder Abholen von Sendungen können je nach Ausprägung mit einem nicht unerheblichen Aufwand an Zeit, Material und/oder Personal verbunden sein. Ein solches Verfahren, von dem die Erfindung ausgeht, ist in der gattungsgemäßen WO 94/15812 A1 beschrieben. Des Weiteren sind Verfahren zum Abliefern und/oder Abholen von Sendungen aus der FR 2 482 533 A1 und der FR 2 672 551 A1 bekannt. Bei diesen Verfahren wird die Sendung beim Abliefern in den Aufnahmebehälter und/oder beim Abholen aus dem Aufnahmebehälter zwar grundsätzlich gegenüber Witterungseinflüssen geschützt, jedoch mit einem erhöhten verfahrenstechnischen und/oder apparativen Aufwand.

Daher liegt der vorliegenden Erfindung die Aufgabe zugrunde, das eingangs genannte und zuvor näher beschriebene Verfahren derart auszugestalten und weiterzubilden, dass der damit verbundene Aufwand verringert werden kann.

Diese Aufgabe ist durch ein Verfahren gemäß Anspruch 1 gelöst.

Erfindungsgemäß wird die Sendung also mittels einer Übergabeeinrichtung abgeliefert und/oder abgeholt, wobei die Übergabeeinrichtung ein Teil des Fahrzeugs ist, das die Sendung anliefert oder abtransportiert. Zudem nutzt das Fahrzeug zum Anliefern und/oder Abtransportieren der Sendung wenigstens teilweise den öffentlichen Straßenverkehr. Es ist also nicht ausgeschlossen, dass das Fahrzeug auch über Privatgelände fährt. Die Anfahrt zum Aufnahmebehälter führt das Fahrzeug jedoch auch über öffentliche Straßen. Insoweit kann es bevorzugt sein, dass der Aufnahmebehälter nahe einer öffentlichen Straße vorgesehen ist, so dass das Fahrzeug beim Anfahren des Aufnahmebehälters die öffentliche Straße nicht verlassen muss.

Das Anfahren des Aufnahmebehälters bedeutet, dass das Fahrzeug in die Nähe des Aufnahmebehälters fährt. Dabei ist es bevorzugt, wenn das Fahrzeug bis auf wenige Meter, insbesondere weniger als 10 m, insbesondere weniger als 5 m, an den Aufnahmebehälter heranfährt, um die Sendung in den Aufnahmebehälter einzubringen und/oder aus dem Aufnahmebehälter entnehmen zu können. Es kann aber auch erst eine Grobannäherung des Fahrzeugs an den Aufnahmebehälter erfolgen, so dass auch zunächst größere Abstände zwischen Fahrzeug und Aufnahmebehälter möglich sind, die beispielsweise bis zu 20 m und mehr betragen können. Bevorzugt sind aber auch dann die Abstände bereits kleiner als 10 m, insbesondere kleiner als 5 m. Anschließend kann dann eine weitere Annäherung, beispielsweise eine über wenigstens einen Sensor gesteuerte Annäherung erfolgen, um die Distanz zwischen dem Fahrzeug und dem Aufnahmebehälter weiter zu verringern, so dass die Übergabeeinrichtung zum Abliefern und/oder Abholen der Sendung eine geringere Distanz überbrücken muss.

Aufgrund der Übergabeeinrichtung ist keine Ablieferung und/oder Abholung unmittelbar durch eine Person, etwa den Fahrer des Fahrzeugs erforderlich. Die Aufgabe einer Person, etwa einer Bedienperson oder des Fahrers, kann sich beispielsweise darin beschränken, das Fahrzeug zum Aufnahmebehälter zu fahren und gegebenenfalls dort, etwa über einen Tastendruck oder einen anderen Steuerbefehl, die Übergabe und/oder das Abholen der Sendung zu initiieren. Bedarfsweise kann die Person jedoch noch darüber hinaus steuernd eingreifen. Die Verwendung der Übergabeeinrichtung führt grundsätzlich gegenüber dem unmittelbaren Einbringen der Sendung in den Aufnahmebehälter und/oder dem unmittelbaren Entnehmen der Sendung aus dem Aufnahmebehälter zu einer Vereinfachung des Verfahrens. Beispielsweise muss der Fahrer des Fahrzeugs nicht mehr aus dem Fahrzeug aussteigen. Zudem kann dann das Abliefern und/oder das Abholen der wenigstens einen Sendung beschleunigt werden.

Die Übergabeeinrichtung kann in einem einfachen Fall lediglich dem Transport der Sendung vom Fahrzeug in den Aufnahmebehälter und/oder vom Aufnahmebehälter zum Fahrzeug dienen. Die Übergabeeinrichtung kann nach einem anderen Ausführungsbeispiel jedoch noch weitere Aufgaben übernehmen. Sie kann beispielsweise dem Transport einer Sendung im Fahrzeug dienen, die an einen Aufnahmebehälter abgeliefert und/oder von dem Aufnahmebehälter abgeholt werden soll. Dabei kann die Übergabeeinrichtung auch auswählen, welche Sendung eines Fahrzeugs transportiert wird und/oder wohin die Sendung in einem Fahrzeug transportiert wird. Die Übergabeeinrichtung weist also wenigstens eine Transporteinrichtung, etwa in Form einer Übergabeeinheit, zur Übergabe der Sendung zwischen dem Fahrzeug und dem Aufnahmebehälter und/oder umgekehrt, auf. Die Übergabeeinrichtung kann bedarfsweise jedoch noch weitere Einrichtungen, insbesondere Transporteinrichtungen aufweisen, die beispielsweise dem Transport der Sendung auf oder im Fahrzeug dienen. Dies kann insbesondere dann der Fall sein, wenn die Übergabeeinheit den Transport der Sendung auf oder in dem Fahrzeug nicht wenigstens teilweise übernimmt.

Die Übergabeeinrichtung ist mit dem Fahrzeug verbunden. Auch wenn diese Verbindung lösbar ausgebildet sein kann, so agiert die Übergabeeinrichtung vorzugsweise nicht unabhängig vom Fahrzeug. Die Übergabeeinrichtung kann also bedarfsweise trotz der Verbindung mit dem Fahrzeug vom Fahrzeug abnehmbar ausgebildet sein. Die Übergabeeinrichtung wird also vorzugsweise nicht lose auf oder in dem Fahrzeug transportiert, etwa um zur Übergabe der Sendung vom Fahrzeug abgeladen zu werden. Die Übergabeeinrichtung verbleibt auch nicht beim Aufnahmebehälter bzw. dessen Nutzer. Genauso wenig ist die Übergabeeinrichtung ein Teil des Aufnahmebehälters, obwohl dieser Vorrichtungen aufweisen kann, welche die Übergabe von Sendungen unterstützen. Es handelt sich bei der Übergabeeinrichtung folglich auch nicht um ein Hilfsmittel zum Tragen der Sendung, dessen sich eine Person bedient, um die Sendung vom Fahrzeug zum Aufnahmebehälter zu tragen und um die Sendung anschließend selbst in den Aufnahmebehälter einzuführen. Die Übergabeeinrichtung ist vorzugsweise vielmehr als Teil des Fahrzeugs anzusehen.

Dementsprechend kann die Übergabeeinrichtung bevorzugt fest mit dem Fahrzeug verbunden sein. Unter einer festen Verbindung der Übergabeeinrichtung mit dem Fahrzeug wird auch eine feste Verbindung zwischen einem Aufbau des Fahrzeugs und der Übergabeeinrichtung angesehen. Dabei kann der Aufbau lösbar mit dem Fahrzeug verbunden sein. Das Fahrzeug kann also bedarfsweise dazu ausgebildet sein, dass ein mit der Übergabeeinrichtung verbundener Aufbau des Fahrzeugs durch einen anderen Aufbau ersetzt wird. Es kann sich bei dem Aufbau beispielsweise um einen sogenannten Wechselbrückenaufbau handeln. Das Fahrzeug kann durch den Wechsel des Aufbaus flexibler eingesetzt werden. Es wird also aufgrund der Verbindung, insbesondere der festen Verbindung zwischen der Übergabeeinrichtung dem Fahrzeug nicht zwingend gefordert, dass die Übergabeeinrichtung nicht, nicht zerstörungsfrei und/oder nicht ohne einen erheblichen Aufwand vom Fahrzeug und/oder dem Aufbau getrennt werden kann.

Bei dem Fahrzeug handelt es sich der Einfachheit halber erfindungsgemäß insbesondere um ein Landfahrzeug, etwa in Form eines Kraftfahrzeugs. Es kann sich dabei beispielsweise um einen Lastkraftwagen oder Lieferwagen handeln. Die Übergabeeinrichtung kann aber auch fest mit einem nicht selbst angetriebenen Teil des Fahrzeugs, etwa in Form eines Anhängers, verbunden sein, der von einer Zugmaschine gezogen wird. Letztlich kann das Fahrzeug also auch mehrteilig ausgebildet sein.

Bei der wenigstens einen Sendung kann es sich um einen Gegenstand in Form eines Stückguts handeln. Insbesondere können die Sendungen Gegenstände des täglichen Bedarfs, wie Verbrauchsmaterialien oder Lebensmittel, sowie technische Gegenstände und Gerätschaften sein. Bevorzugt handelt es sich bei der wenigstens einen Sendung um eine Briefsendung, Paketsendung und/oder Flyer. Dann kommen die Vorteile des Verfahrens in besonderem Maße zum Tragen. Ein Flyer kann dabei bedarfsweise auch eine Broschüre, eine Zeitschrift und/oder ein Prospekt sein, während eine Paketsendungen neben einem Paket auch ein Päckchen sein kann. Zudem kann eine Briefsendung neben einem Brief auch eine Postkarte sein.

Besonders bevorzugt handelt es sich bei der wenigstens einen Sendung um eine Paketsendung. Das Abliefern und/oder das Abholen solcher Sendungen ist nämlich mit einem besonderen Aufwand verbunden, etwa weil Pakete nicht in Briefkästen passen. Der Aufnahmebehälter kann daher so dimensioniert sein, dass er Pakete aufnehmen kann, sofern diese eine bestimmte Größe nicht überschreiten. Insoweit kann es sich bei dem Aufnahmebehälter vorzugsweise um einen Paketkasten handeln.

In den Aufnahmebehälter können bedarfsweise auch mehrere Sendungen gleichzeitig oder nacheinander eingebracht werden. Ebenso können mehrere Sendungen gleichzeitig oder nacheinander aus dem Aufnahmebehälter entnommen werden, wenn dies etwa der Effektivitätssteigerung dient. Unabhängig davon kann der Aufnahmebehälter beispielsweise ein Paketkasten, also ein Aufnahmebehälter für die Zustellung von Paketsendungen sein.

Bei einer ersten bevorzugten Ausgestaltung des Verfahrens wird die wenigstens eine Sendung durch die Übergabeeinrichtung aus dem Fahrzeug in den Aufnahmebehälter eingebracht und/oder aus dem Aufnahmebehälter in das Fahrzeug verbracht. So kann die Sendung beispielsweise vor Witterungseinflüssen geschützt werden, was insbesondere dann praktisch ist, wenn die Sendung wenigstens eine Briefsendung, eine Paketsendung und/oder ein Flyer ist. Grundsätzlich kann die abzuliefernde und/oder abzuholende Sendung nämlich auch auf dem Fahrzeug gelagert werden. Es kann also grundsätzlich auch ein offenes Fahrzeug, etwa ein Fahrzeug mit einer offenen Pritsche verwendet werden.

Besonders bevorzugt ist es, wenn sich der Aufnahmebehälter auf dem Rand eines Grundstücks befindet, etwa dem Grundstück des Empfängers der Sendung. Der Aufnahmebehälter ist also vorzugsweise nahe der Grundstücksgrenze positioniert. Der Rand des Grundstücks ist dabei vorzugsweise weniger als 5 m, vorzugsweise weniger als 2,5 m, insbesondere weniger als 1,5 m breit, und zwar ausgehend von der Grundstücksgrenze. Dies erleichtert das Anfahren des Aufnahmebehälters durch das Fahrzeug erheblich, und zwar insbesondere dann, wenn der entsprechende Rand des Grundstücks im Bereich des Aufnahmebehälters an eine, vorzugsweise öffentliche, Straße grenzt.

Zum Anfahren des Aufnahmebehälters kann das Fahrzeug alternativ oder zusätzlich einfach am Straßenrand angrenzend zum Grundstück, insbesondere zum Aufnahmebehälter, anhalten. Dies gilt insbesondere für den Fall, dass der Aufnahmebehälter am Rand des Grundstücks vorgesehen ist. Die verbleibende Distanz zwischen dem Fahrzeug und dem Aufnahmebehälter auf dem entsprechenden Grundstück kann dann mittels der Übergabeeinrichtung überwunden werden. Das Fahrzeug steht währenddessen wahlweise auf der Straße und/oder dem Bürgersteig angrenzend zu dem entsprechenden Grundstück.

Das Einbringen der Sendung vom, insbesondere aus dem, Fahrzeug in den Aufnahmebehälter mittels der Übergabeeinrichtung und/oder das Verbringen der Sendung aus dem Aufnahmebehälter zum, insbesondere in das, Fahrzeug mittels der Übergabeeinrichtung kann wenigstens teilweise durch eine Steuereinrichtung gesteuert werden. Auf diese Weise kann beispielsweise der Fahrer entlastet und die Gefahr einer Fehlbedienung gesenkt werden. Die Steuereinrichtung kann dabei wenigstens einen Schritt der Übergabeeinrichtung wenigstens teilweise steuern, so dass beispielsweise das Einbringen der Sendung in den Aufnahmebehälter und/oder das Entnehmen der Sendung aus dem Aufnahmebehälter sowie den Transport der Sendung vom Fahrzeug zum Aufnahmebehälter und/oder in die Gegenrichtung wenigstens teilweise gesteuert wird. Die Steuerung durch die Steuereinrichtung kann sich auch auf den Transport einer abzuliefernden und/oder einer abzuholenden Sendung beziehen. Alternativ oder zusätzlich kann durch die Steuereinrichtung auch das Ausrichten der Übergabeeinrichtung oder eines Teils davon, etwa einer Übergabeeinheit, relativ zum Aufnahmebehälter betreffen. Bedarfsweise kann die Steuerung das Öffnen und/oder Schließen des Aufnahmebehälters oder das Verriegeln und/oder Entriegeln des Aufnahmebehälters betreffen. Es ist in gleicher Weise möglich, dass die Steuereinrichtung das Verriegeln und/oder das Entriegeln von Aufnahmebehälter und einer Halterung des Aufnahmebehälters so wie gegebenenfalls das Verschließen und Öffnen eines mit dem entsprechenden Verriegelungsmechanismus gekoppelten Schließmechanismus wenigstens teilweise gesteuert wird. In jedem Fall kann der Fahrer entlastet und Fehlbedienungen verhindert werden.

Besonders bevorzugt ist es alternativ oder zusätzlich, wenn der Transport der wenigstens einen Sendung vom, insbesondere aus dem, Fahrzeug in den Aufnahmebehälter und/oder vom Aufnahmebehälter zum, insbesondere in das, Fahrzeug infolge der über die Steuereinrichtung gesteuerten Übergabeeinrichtung autonom, also ohne händischen Eingriff eines Fahrers oder einer Bedienperson, erfolgt. Es ist auch denkbar, dass wenigstens ein bestimmter Schritt, wie etwa ein genaues Ausrichten einer Übergabeeinrichtung relativ zum Aufnahmebehälter, das Öffnen und/oder Schließen des Aufnahmebehälters sowie das Verriegeln und/oder Entriegeln des Aufnahmebehälters mit einer Halterung des Aufnahmebehälters autonom erfolgt.

Das Einbringen einer Sendung in den Aufnahmebehälter und/oder das Verbringen der Sendung aus dem Aufnahmebehälter in das Fahrzeug kann alternativ oder zusätzlich mit Hilfe der Steuereinrichtung grundsätzlich nach unterschiedlichen, vorgegebenen Kriterien gesteuert werden. Die Kriterien können beispielsweise festlegen, welche Schritte von der Übergabeeinrichtung nacheinander zu durchlaufen sind, ob eine Sendung in den Aufnahmebehälter eingebracht wird, ob eine Sendung aus dem Aufnahmebehälter entnommen wird, wohin die aus dem Aufnahmebehälter entnommene Sendung im Fahrzeug transportiert wird, welche Sendung in den Aufnahmebehälter eingebracht wird, wo sich diese Sendung befindet, wie Zugang zu dem Aufnahmebehälter erhalten wird, wann die Übergabeeinrichtung zur Verhinderung von Unfällen gestoppt wird und so weiter. Daher ist es bevorzugt, wenn das Einbringen der Sendung vom, insbesondere aus dem, Fahrzeug in den Aufnahmebehälter und/oder das Verbringen der Sendung aus dem Aufnahmebehälter zum, insbesondere in das, Fahrzeug wenigstens teilweise durch eine Steuereinrichtung nach vorgegebenen Kriterien gesteuert wird.

Die Übergabeeinrichtung kann bedarfsweise manuell, etwa vom Fahrer des Fahrzeugs gestartet und/oder gestoppt werden, etwa um zu verhindern, dass Gegenstände beschädigt oder Personen verletzt werden. Zudem kann die Sendung bedarfsweise eigenständig und ohne Zutun einer Person, etwa einer Bedienperson oder des Fahrers, von der Übergabeeinrichtung ausgewählt werden. Es kann alternativ oder zusätzlich auch die einem Aufnahmebehälter entnommene Sendung durch die Übergabeeinrichtung im Fahrzeug abgelegt werden. Es bedarf dann hierzu keines Handlings der Sendungen durch etwa den Fahrer des Fahrzeugs.

Alternativ oder zusätzlich kann wenigstens ein Sensor, vorzugsweise des Fahrzeugs die Position des Aufnahmebehälters relativ zum Fahrzeug erfassen, um das Fahrzeug in einer vorbestimmten relativen Ausrichtung zum Aufnahmebehälter abzustellen. Der Sensor kann wenigstens eine Kamera aufweisen, welche den Aufnahmebehälter erkennt. Zudem kann noch wenigstens ein weiterer Sensor vorgesehen sein, der in der Lage ist, den Abstand zum Aufnahmebehälter zu ermitteln. Bedarfsweise können auch zwei oder mehr Kameras vorgesehen werden, die gemeinsam nicht nur die Richtung zum Aufnahmebehälter, sondern auch dessen Entfernung bestimmen können. Durch den wenigstens einen Sensor kann jedenfalls sichergestellt werden, dass das Fahrzeug in einer Position angeordnet wird, in der die Übergabeeinrichtung so relativ zum Aufnahmebehälter positioniert und ausgerichtet ist, dass die Übergabeeinrichtung die Sendung in den Aufnahmebehälter einbringen oder aus diesem entnehmen kann.

Dabei kann der wenigstens eine Sensor mit einer Annäherungseinrichtung verbunden sein, so dass die Annäherungseinrichtung die Annäherung des Fahrzeugs an den Aufnahmebehälter erleichtert oder steuert. Dabei kann es bedarfsweise ausreichen, das Fahrzeug grob zum Aufnahmebehälter auszurichten, wenn die Übergabeeinrichtung einen Feinausgleich hinsichtlich der Positionierung von Fahrzeug bzw. Übergabeeinrichtung zu Aufnahmebehälter durchführt. Wenn die Annäherungseinrichtung in der Lage ist, das Fahrzeug ohne Hilfe des Fahrers zu steuern, kann das Fahrzeug autonom in vorbestimmter Weise zum Aufnahmebehälter ausgerichtet werden, und zwar abhängig von der erfassten Position des Aufnahmebehälters relativ zum Fahrzeug. Dies ist besonders einfach. Außerdem werden so Fehler durch den Fahrer vermieden, die eine unzureichende Ausrichtung vom Fahrzeug relativ zum Aufnahmebehälter nach sich zieht.

Bedarfsweise kann eine Person, etwa ein Bediener oder der Fahrer des Fahrzeugs, jedoch in die Steuerung der Übergabeeinrichtung eingreifen. So kann er die Übergabeeinrichtung aktivieren, wenn die Person sich versichert hat, dass hierdurch keine Gefahr der Beschädigung bestimmter Gegenstände oder der Verletzung von Passanten droht. Bedarfsweise wird aber auch diese Aufgabe von der Übergabeeinrichtung selbst übernommen, wozu diese dann mit wenigstens einem entsprechenden Sensor versehen sein kann. Die Person kann bedarfsweise aus den gleichen Gründen die Übergabeeinrichtung stoppen, etwa wenn die Übergabeeinrichtung nicht so ausgebildet ist, dass die Übergabeeinrichtung beim Auftreten bestimmter unerwünschter Ereignisse oder Betriebszustände nicht bereits automatisch gestoppt wird.

Wenn keine autonome Ausrichtung und/oder Positionierung des Fahrzeugs relativ zum Aufnahmebehälter erfolgt, können dem Fahrer des Fahrzeugs auch Informationen betreffend die Position des Aufnahmebehälters relativ zum Fahrzeug angezeigt werden. Der Fahrer kann dann das Fahrzeug einfach und zuverlässig in geeigneter Weise an den Aufnahmebehälter annähern. Dabei könnten die Informationen durch die mit dem wenigstens einen Sensor verbundene Annäherungseinrichtung bereitgestellt werden. Beispielsweise wird die aktuelle Position des Fahrzeugs relativ zum Aufnahmebehälter angezeigt oder es wird angezeigt, in welche Richtung das Fahrzeug bewegt werden muss, um eine zufriedenstellende Position relativ zum Aufnahmebehälter einzunehmen.

Alternativ oder zusätzlich kann wenigstens ein Sensor, vorzugsweis am Fahrzeug und/oder an der Übergabeeinrichtung vorgesehen sein, der die Position des Aufnahmebehälters relativ zur Übergabeeinrichtung erfasst. Dabei kann wenigstens eine Kamera vorgesehen sein, die den Aufnahmebehälter erkennt, so dass abgeleitet werden kann, in welcher Richtung sich der Aufnahmebehälter in Bezug auf die Übergabeeinrichtung befindet. Um den Abstand zum Aufnahmebehälter zu ermitteln, kann wenigstens ein weiterer Sensor vorgesehen sein. Die Richtung und der Abstand zum Aufnahmebehälter können bedarfsweise auch mit wenigstens zwei Kameras ermittelt werden. Wenn über den wenigstens einen Sensor die relative Position des Aufnahmebehälters zur Übergabeeinrichtung bestimmt wird, kann die Übergabeeinrichtung, vorzugsweise autonom, abhängig von der erfassten Position des Aufnahmebehälters relativ zur Übergabeeinrichtung gesteuert werden. Auf diese Weise kann auch eine etwas ungenaue Positionierung des Fahrzeugs relativ zum Aufnahmebehälter ausgeglichen werden. Es kann so zudem sichergestellt werden, dass die Sendung durch die Übergabeeinrichtung zuverlässig an den Aufnahmebehälter übergeben und/oder von dem Aufnahmebehälter übernommen werden kann.

Wie die Steuerung der Übergabeeinrichtung anhand der von dem wenigstens einen Sensor bereitgestellten Informationen zu erfolgen hat, kann durch vorgegebene Kriterien mit Hilfe der Steuereinrichtung festgelegt werden. Diese Kriterien können beispielsweise festlegen, in welcher Weise und Ausrichtung sich die Übergabeeinrichtung dem Aufnahmebehälter nähern soll und/oder wo die Übergabeeinrichtung in welcher Weise am Aufnahmebehälter angreifen soll.

Die Übergabe der Sendung in den Aufnahmebehälter und/oder vom Aufnahmebehälter zum Fahrzeug kann auf unterschiedliche Weisen, und bedarfsweise gesteuert durch die Steuereinrichtung erfolgen. Besonders einfach ist es dabei, wenn zum Transport der Sendung die Schwerkraft ausgenutzt wird, etwa um zusätzliche Antriebe einzusparen. Dies kann der Einfachheit halber beispielsweise durch Verwendung wenigstens eines Rollenförderbands und/oder einer Rutsche erreicht werden. Die Sendung kann beispielsweise auf einem geneigten Rollenförderband abgelegt und dort von einem Riegel formschlüssig gehalten werden. Wenn die Sendung durch Verstellen des Riegels freigegeben wird, bewegt sich die Sendung entlang des Rollenförderbands nach unten, bedarfsweise bis die Sendung von einer weiteren Einrichtung zum Aufnahmebehälter transportiert wird oder in den Aufnahmebehälter gelangt. Anstelle eines Rollenförderbands oder auch zusätzlich kann eine Rutsche verwendet werden, die dann jedoch steil und glatt genug sein muss, um einen zuverlässigen Transport von Sendungen zu ermöglichen.

Alternativ oder zusätzlich kann die Übergabeeinrichtung wenigstens einen Greifarm aufweisen. Die Sendung kann durch den Greifarm sehr genau vom Fahrzeug in den Aufnahmebehälter oder vom Aufnahmebehälter zum Fahrzeug transportiert werden. Außerdem kann durch den Greifarm eine etwas ungenaue Positionierung des Fahrzeugs leicht ausgeglichen werden. Nicht zuletzt kann mittels eines Greifarms aber auch über ein zwischen dem Aufnahmebehälter und dem Fahrzeug befindliches Hindernis hinweggegriffen werden. Dabei ist es grundsätzlich bevorzugt, wenn der Greifarm in drei zueinander senkrechten Raumrichtungen, also dreidimensional, bewegt werden kann. Der Greifarm kann auch den Aufnahmebehälter ergreifen, der von einer Halterung des Aufnahmebehälters bereitgehalten werden kann, um den Aufnahmebehälter zum Fahrzeug oder gar in das Fahrzeug zu verbringen. Dann kann der Greifarm den Aufnahmebehälter auch wieder zurück zur Halterung des Aufnahmebehälters bringen.

Der Greifarm kann alternativ oder zusätzlich aber auch zum Ergreifen einer Sendung im Fahrzeug und zum Transport der Sendung zum Aufnahmebehälter sowie zum Ergreifen einer Sendung im Aufnahmebehälter und zum Transport der Sendung in das Fahrzeug genutzt werden. Dabei können die Sendungen direkt in der Positionen ergriffen oder abgelegt werden, in der die Sendungen im Fahrzeug gelagert werden. Es kann jedoch zur Einsparung von Platz auch vorgesehen sein, dass die Sendungen über wenigstens eine weitere Transporteinrichtung von dem Lagerort im Fahrzeug zu einem Aufnahmeort für den Greifarm transportiert werden. Alternativ oder zusätzlich kann die Sendung vom Greifarm an einem Abgabeort abgelegt werden, von dem aus die Sendung mit Hilfe einer weiteren Transporteinrichtung zum Lagerort der Sendung im Fahrzeug transportiert wird. Bedarfsweise können für mehrere der zuvor genannten Aufgaben auch eine Mehrzahl von Greifarmen, insbesondere zwei Greifarme, vorgesehen sein. Um das Agieren des wenigstens einen Greifarms in der gewünschten Weise sicherzustellen, können Kriterien für Betriebszustände des Greifarms vorgegeben werden, die erwünscht sind und/oder vermieden werden sollen. Die Steuerung des wenigstens einen Greifarms kann dann mittels der Steuereinrichtung erfolgen.

Die Übergabe der Sendung vom Fahrzeug an den Aufnahmebehälter kann vereinfacht werden, wenn die Sendung über ein Rollenförderband und/oder eine Rutsche zu einem Aufnahmeort transportiert wird, wo die Sendung vom Greifarm ergriffen werden kann. Alternativ kann der Greifarm die aus einem Aufnahmebehälter entnommene Sendung in einem Abgabeort absetzen, aus dem die Sendung dann beispielsweise über ein Rollenförderband und/oder eine Rutsche weitergeleitet wird, bedarfsweise bis an einen Ort im Fahrzeug, an dem die Sendung bis zum Entladen des Fahrzeugs gelagert wird.

Wenn die Sendung von vorne, hinten oder von der Seite in den Aufnahmebehälter eingebracht und/oder aus dem Aufnahmebehälter entnommen wird, kann die Übergabeeinrichtung konstruktiv verhältnismäßig einfach ausgebildet sein. Wenn die Sendung von oben in den Aufnahmebehälter eingebracht und/oder aus dem Aufnahmebehälter entnommen wird, kann dies konstruktiv aufwendiger sein. Hindernisse zwischen dem Fahrzeug und dem Aufnahmebehälter sind dann jedoch umso eher tolerierbar. Besonders einfach ist es zudem, wenn die Sendung dem Aufnahmebehälter von vorne, hinten, von der Seite oder insbesondere von unten, also beispielsweise über den Boden des Aufnahmebehälters, entnommen wird. Im letztgenannten Fall kann die Schwerkraft ausgenutzt und somit eine zuverlässige Entleerung sichergestellt werden.

Zum Einbringen der Sendung in den Aufnahmebehälter und/oder Entnehmender der Sendung aus dem Aufnahmebehälter weist der Aufnahmebehälter eine Zugangseinheit, insbesondere in Form einer Öffnung auf, die den Zugang zum Innenraum des Aufnahmebehälters ermöglicht. In einem besonders einfachen Fall ist diese Zugangseinheit eine Öffnung. Die Aufnahmebehälter weisen dabei vorzugsweise eine Zugangseinheit auf, die einen Zugang zum Innenraum des Aufnahmebehälters von in jeder Richtung wenigstens 10 cm, insbesondere wenigstens 20 cm bildet. Alternativ oder zusätzlich weist der für die Sendung im Inneren des Aufnahmebehälters vorgesehene Raum in jede Raumrichtung eine Abmessung von wenigstens 10 cm, insbesondere wenigstens 20 cm, auf.

Damit die Sendung im Aufnahmebehälter vor äußeren Einflüssen geschützt ist, kann ein Verschlussmittel vorgesehen sein, um die Zugangseinheit zu verschließen. In der geöffneten Stellung des Verschlussmittels ist der Zugang zum Innenraum des Aufnahmebehälters freigegeben, während in der geschlossenen Stellung des Verschlussmittels der Zugang zum Innenraum des Aufnahmebehälters blockiert ist. Dabei bietet sich der Einfachheit halber insbesondere ein Verschlussmittel in Form einer Klappe, eines Schiebers und/oder einer Türe an. Damit die Zugangseinheit zum Einbringen der Sendung in das Verschlussmittel und/oder zum Entnehmen der Sendung aus dem Verschlussmittel einfach geöffnet werden kann, bietet es sich an, wenn für die Ablieferung und/oder Abholung der Sendung der Aufnahmebehälter, insbesondere ein Verschlusselement, von einer Öffnungseinheit, vorzugsweise der Übergabeeinrichtung, geöffnet wird.

Damit der Aufnahmebehälter problemlos mit dem Verschlussmittel in der geschlossenen Stellung zurückgelassen werden kann, kann der Aufnahmebehälter alternativ oder zusätzlich nach der Zustellung und/oder dem Abholen der Sendung von einer Schließeinheit, vorzugsweise der Übergabeeinrichtung, geschlossen werden. Dabei ist es der Einfachheit halber besonders bevorzugt, wenn die Öffnungseinheit und die Schließeinheit dieselbe Einheit, mithin eine Öffnungs- und Schließeinheit sind.

Damit nur berechtigte Personen Zugriff auf die Sendung haben, kann alternativ oder zusätzlich ein Schließmechanismus zum Entriegeln und/oder Verriegeln des Verschlussmittels mit dem Aufnahmebehälter, insbesondere durch die Übergabeeinrichtung vorgesehen sein. Im geschlossenen Zustand des Schließmechanismus ist das sich in der geschlossenen Stellung befindende Verschlussmittel verriegelt. Im geöffneten Zustand des Schließmechanismus kann das Verschlussmittel, ebenfalls in die geöffnete Stellung gebracht werden, um Zugang zu dem Innenraum des Aufnahmebehälters zu erlangen. Um den Schließmechanismus in den geöffneten Zustand zu bringen, kann eine Art Schlüssel, ein Code oder eine anderes Autorisierungsmittel erforderlich sein. Der Schlüssel, der Code und/oder ein anderes Autorisierungsmittel kann von der Übergabeeinrichtung bereitgestellt werden, so dass es keiner Person bedarf, um den Schließmechanismus zu öffnen. Die Öffnung des Schließmechanismus kann durch eine Abfrage durch den Aufnahmebehälter und/oder eine Autorisierung der Übergabeeinrichtung erfolgen. Die Übergabeeinrichtung kann dazu etwa einen RFID-Chip aufweisen oder, insbesondere per Funk, einen Zugangscode an den Aufnahmebehälter übermitteln. Grundsätzlich kann die Übergabeeinrichtung Berechtigungsinformationen für den Schließmechanismus bereithalten und/oder an den Schließmechanismus übergeben. Sofern für die Betätigung des Schließmechanismus eine Spannungsversorgung erforderlich ist, kann diese über wenigstens eine Batterie gewährleistet werden. Bedarfsweise kann es sich um einen Akkumulator handeln, der über eine dem Aufnahmebehälter zugeordnete Solarzelleneinheit aufgeladen wird. Verlässlicher kann es jedoch sein, die Spannungsversorgung durch die Übergabevorrichtung beispielsweise induktiv oder per Kontakt bereitzustellen.

Wie der Schließmechanismus vom verschlossenen in den geöffneten Zustand zu bringen ist, kann mittels Kriterien vorgegeben werden, nach denen die Steuereinrichtung die Übergabeeinrichtung steuert. Der Schließmechanismus kann nicht nur elektrisch, sondern bedarfsweise auch mechanisch mit einer Art Schlüssel etwa der Übergabeneinrichtung erfolgen, der in eine Art Schloss passt und damit den Schließmechanismus betätigt. Die entsprechende Betätigung kann auch magnetisch, etwa durch einen Magneten der Übergabeeinrichtung erfolgen, wenn dieser an eine bestimmte Stelle des Aufnahmebehälters bewegt wird. Im Falle einer mechanischen und/oder magnetischen Betätigung kann eine Spannungsversorgung entbehrlich sein. Um die Sendung beim Abliefern in den Aufnahmebehälter und/oder beim Abholen aus dem Aufnahmebehälter nicht der Witterung, beispielsweise Regen oder Schnee, auszusetzten, entnimmt die Übergabeeinrichtung den Aufnahmebehälter erfindungsgemäß von, insbesondere aus, einer Halterung des Aufnahmebehälters und befördert den Aufnahmebehälter wenigstens teilweise in das Fahrzeug. Dabei ist es aus den genannten Gründen bevorzugt, den Aufnahmebehälter vollständig in das Fahrzeug zu befördern. Aus Platzgründen kann es jedoch zweckmäßiger sein, wenn der Aufnahmebehälter nur teilweise in das Fahrzeug befördert wird. Im wenigstens teilweise im Fahrzeug befindlichen Zustand des Aufnahmebehälters wird die Sendung in den Aufnahmebehälter eingebracht und/oder aus dem Aufnahmebehälter entnommen. Zum Transport des Aufnahmebehälters von der Halterung des Aufnahmebehälters bis teilweise ins Fahrzeug hinein und zum Transport des Aufnahmebehälters aus dem Fahrzeug zurück zur Halterung des Aufnahmebehälters bietet sich insbesondere die Verwendung eines Greifarms an. Dieser kann sehr genau und flexibel gesteuert werden, auch wenn das Fahrzeug nicht optimal zum Aufnahmebehälter ausgerichtet ist und/oder sich Hindernisse zwischen dem Aufnahmebehälter und dem Fahrzeug befinden. Das Einbringen und/oder Entnehmen der Sendung in den Aufnahmebehälter bzw. aus dem Aufnahmebehälter heraus, kann über einen weiteren Greifarm oder eine andere Transporteinrichtung erfolgen.

Damit der Aufnahmebehälter von der Halterung des Aufnahmebehälters sicher gehalten und problemlos freigegeben wird, kann der Aufnahmebehälter durch einen Verriegelungsmechanismus mit der Halterung des Aufnahmebehälters verriegelt und entriegelt werden, und zwar insbesondere durch die Übergabeeinrichtung.

Dabei kann es besonders bevorzugt sein, wenn der Verriegelungsmechanismus mit einem Schließmechanismus gekoppelt ist. Im geschlossenen Zustand des Schließmechanismus kann der Verriegelungsmechanismus nicht geöffnet werden, um den Aufnahmebehälter freizugeben. Dies ist nur im geöffneten Zustand möglich. Der Schließmechanismus kann dabei nur mit Hilfe eines Schlüssels eines Codes oder eines anderen Autorisierungsmittels, wie etwa eines RFID-Chips, geöffnet werden. Bedarfsweise können Berechtigungsinformationen für den Schließmechanismus bereitgehalten oder an den Schließmechanismus übergeben werden. Dann wird der Schließmechanismus nur nach erfolgreicher Prüfung geöffnet. Ferner kann der Schließmechanismus der Einfachheit halber durch die Übergabeeinrichtung betätigt werden. Der Schließmechanismus kann bedarfsweise auch mechanisch mit einer Art Schlüssel etwa der Übergabeneinrichtung betätigt werden, der in eine Art Schloss passt und damit den Schließmechanismus betätigt. Die entsprechende Betätigung kann auch magnetisch, etwa durch einen Magneten der Übergabeeinrichtung erfolgen, wenn dieser an eine bestimmte Stelle des Aufnahmebehälters bewegt wird. Im Falle einer mechanischen und/oder magnetischen Betätigung kann eine Spannungsversorgung entbehrlich sein.

Um das Abliefern und/oder das Abholen von Sendungen zu vereinfachen, kann das Fahrzeug von wenigstens einer Sammelstation zum wenigstens einen

Aufnahmebehälter und vom wenigstens einen Aufnahmebehälter zu einer Sammelstation fahren. Dann kann das Fahrzeug und bedarfsweise weitere Fahrzeuge einfach und zügig mit wenigstens einer abzuliefernden Sendung beladen werden. Alternativ oder zusätzlich kann die wenigstens eine abgeholte Sendung in der Sammelstation entladen werden. Die Sendung kann dann bedarfsweise mit weiteren Sendungen von der Sammelstation aus zu einem Aufnahmebehälter transportiert werden. Zur Steigerung der Effizienz ist es bevorzugt, wenn das Fahrzeug in derselben Sammelstation mit Sendungen beladen wird, in der die von dem wenigstens einen Nutzer abgeholte Sendung entladen wird. Ganz grundsätzlich ist es in diesem Zusammenhang bevorzugt, wenn das Fahrzeug autonom von der Sammelstation zu wenigstens einem Aufnahmebehälter und wieder zurück zur Sammelstation oder einer anderen Sammelstation fährt. Es bedarf dann keines Fahrers. Dabei sollte dann die Annäherung des Fahrzeugs an den Aufnahmebehälter vorzugsweise ebenso autonom erfolgen können, wie das Entnehmen von Sendungen aus dem Aufnahmebehälter und/oder das Einbringen von Sendungen in den Aufnahmebehälter, und zwar jeweils mittels der Übergabeeinrichtung, da dann gänzlich auf einen Fahrer oder eine andere Person verzichtet werden kann. Allerdings kann, soweit erforderlich, eine Person mit dem Fahrzeug mitfahren, die jedoch in erster Linie überwachend tätig ist und nur dann tatsächlich in die Steuerung des Fahrzeugs eingreift, um Unfälle mit Sachschaden oder Personenschaden zu vermeiden.

Zur Steigerung der Effizienz und/oder der Flexibilität können mehrere Sendungen als Sendungseinheiten in den Aufnahmebehälter eingebracht und/oder aus dem Aufnahmebehälter entnommen werden. So können auch unterschiedliche Sendungen insbesondere auch unterschiedliche Arten von Sendungen (z.B. Briefsendung, Paketsendung und Flyer) gemeinsam zugestellt werden. Für die Abholung der Sendungen gilt im Prinzip dasselbe.

Hinsichtlich der zuzustellenden Sendungen besteht die Möglichkeit, die Sendungen in einer Sammelstation zu Sendungseinheiten zusammenzustellen und anschließend zusammen in das Fahrzeug zu verladen. Es können die Sendungen aber auch separat in das Fahrzeug verladen werden. Dann kann die Zusammenstellung der einzelnen Sendungen zu einer Sendungseinheit im Fahrzeug erfolgen. Es können die Sendungen aber auch einzeln in den Aufnahmebehälter eingebracht werden, so dass die Sendungseinheit erst im Aufnahmebehälter zusammengebracht wird.

Um die Sendungen einfacher im Fahrzeug zu lagern und in den Aufnahmebehälter einbringen zu können, können Sendungen miteinander verbunden werden und/oder in einer Transporteinheit zusammengebracht werden. Das Verbinden der Sendungen kann einfach erfolgen, indem die Sendungen, insbesondere Briefsendungen in einen Beutel, eine Kartonage oder einen Sack gesteckt werden. Diese zusätzlichen Mittel können bedarfsweise verschlossen werden. Die Sendungen können alternativ oder zusätzlich aber auch mit wenigstens einem Band zusammengeschnürt werden. In beiden Fällen können die Sendungen platzsparend im Fahrzeug gelagert werden. Dies ist bei Verwendung einer Transporteinheit, etwa in Form einer Box oder Kassette (jeweils z.B. aus Pappe oder Plastik) nur bedingt der Fall. Daher ist es zum Einsparen von Platz bevorzugt, wenn Transporteinheiten unterschiedlicher Größen oder Transporteinheiten mit variabler Größe verwendet werden. Die Transporteinheiten können die Lagerung und den Transport der Sendungen vereinfachen.

Damit mit einem Fahrzeug möglichst viele Nutzer in kurzer Zeit bedient werden können, kann jeweils wenigstens eine Sendung bei mehreren Aufnahmebehältern abgeliefert und/oder abgeholt werden. Das Fahrzeug fährt dann nacheinander wenigstens teilweise über öffentliche Straßen die Aufnahmebehälter an. Dort angelangt, wird die zuzustellende Sendung jeweils durch eine fest mit dem Fahrzeug verbundene Übergabeeinrichtung vom, insbesondere aus, dem Fahrzeug in den jeweiligen Aufnahmebehälter eingebracht und/oder es wird die abzuholende Sendung jeweils durch die fest mit dem Fahrzeug verbundene Übergabeeinrichtung aus dem jeweiligen Aufnahmebehälter zum, insbesondere in das, Fahrzeug verbracht.

Das Fahrzeug kann also in einer Tour eine Reihe von Aufnahmebehältern anfahren und dort jeweils Sendungen zustellen und/oder zum Versand abholen. Als Tour kann daher eine Fahrt ausgehend von einer Sammelstation über wenigstens einen Aufnahmebehälter eines Nutzers bis zu einer weiteren Sammelstation oder der Sammelstation des Ausgangspunkts der Tour angesehen werden. Wenn alle von der Sammelstation an das Fahrzeug übergebenen Sendungen zugestellt und/oder alle von den Aufnahmebehältern der Nutzer abgeholten Sendungen im Fahrzeug aufgenommen sind, fährt das Fahrzeug wieder an eine Sammelstation, bei der es sich der Einfachheit halber um die Sammelstation handelt, von der das Fahrzeug zuvor losgefahren ist. Dort können dann die abgeholten Sendungen entladen und/oder die als nächstes zuzustellenden Sendungen in das Fahrzeug geladen werden.

Die Ablieferung der Sendung wird weiter vereinfacht, wenn das Fahrzeug in Abhängigkeit von der geplanten Reihenfolge der anzufahrenden Aufnahmebehälter mit Sendungen beladen wird. Dabei bietet es sich insbesondere an, wenn die Reihenfolge der geladenen Sendungen mit der geplanten Reihenfolge der anzufahrenden Aufnahmebehälter übereinstimmt. Dann müssen die Sendungen nur der Reihe nach entladen werden, was das Entladen der Sendungen in der richtigen Reihenfolge vereinfacht. Wenn bei einem oder mehreren Aufnahmebehältern mehrere Sendungen abzuliefern sind, dann kann die Reihenfolge der Beladung bzw. der geladenen Sendungen, die an denselben Aufnahmebehälter geliefert werden sollen, untereinander grundsätzlich beliebig sein.

Bedarfsweise kann alternativ oder zusätzlich die Reihenfolge der angefahrenen Aufnahmebehälter jedoch von der geplanten Reihenfolge der anzufahrenden Aufnahmebehälter abweichen, etwa um die Zustellreihenfolge an die aktuelle Verkehrssituation anzupassen. Um dementsprechend die Reihenfolge des Ablieferns der Sendungen an die Reihenfolge anpassen zu können, in der die Aufnahmebehälter tatsächlich angefahren werden, kann eine entsprechend angepasste Transportvorrichtung, etwa ein Transportband oder eine Transportkette, vorgesehen sein, über welche die Reihenfolge der Sendungen geändert werden kann. Die Sendungen können alle mit der Transportvorrichtung verbunden sein und/oder mit der Transporteinrichtung bewegt werden. Beispielsweise kann durch eine geeignete Verstellung der Transportvorrichtung immer die gewünschte Sendung an eine Ausgabeposition bewegt werden. Dort kann die entsprechende Sendung bedarfsweise von der Transportvorrichtung getrennt und anschließend an einen Aufnahmebehälter übergeben werden. Besonders bevorzugt ist es dabei, wenn die Transportvorrichtung und/oder die Sendungen im Kreis gefahren werden können, auch wenn die Transportvorrichtung nicht kreisförmig ausgebildet sein muss. So ist nur eine Transportvorrichtung nötig, um immer die gewünschte Sendung an die Ausgabeposition zu bewegen. Die Transportvorrichtung kann bedarfsweise aber auch in entgegengesetzte Richtungen bewegt werden, also beispielsweise vor und zurück. Dann ist es nicht erforderlich, dass die Sendungen im Kreis gefahren werden können, um immer die gewünschte Sendung zur Ausgabeposition zu bewegen.

Es könnte aber auch jedem Empfänger oder Aufnahmebehälter ein Bereich zur Lagerung der Sendung im Fahrzeug zugewiesen werden. Dann muss nur bekannt sein, welchem Empfänger eine Sendung zugestellt werden soll, bzw. welcher Aufnahmebehälter vom Fahrzeug angefahren wurde. So kann die richtige Sendung in den Aufnahmebehälter eingebracht werden. Auf die Reihenfolge der geladenen Sendungen bzw. auf die Reihenfolge des Ladens der Sendungen kommt es dann nicht oder weniger an. Dieses Vorgehen erlaubt es in einfacher Weise, etwa aufgrund der aktuellen Verkehrssituation, die Route zu ändern. Allerdings muss dann sichergestellt werden, dass die Sendungen in unterschiedlicher Reihenfolge zum Verbringen in die Aufnahmebehälter bereitgestellt werden können. Alternativ oder zusätzlich können die den Aufnahmebehältern der Kunden entnommenen Sendungen auf Plätzen innerhalb des Fahrzeugs abgelegt werden, die infolge der bereits erfolgten Ablieferung von anderen Sendungen freigeworden sind. Das Handling der Sendungen beim Ausladen und/oder Einladen kann nach vorgegebenen Kriterien erfolgen, die der Steuerung der Übergabeeinrichtung durch die Steuereinrichtung zugrunde gelegt sein können.

Unter der Übergabeeinrichtung kann eine Mehrzahl von Transporteinrichtungen verstanden werden. Es kann beispielsweise wenigstens eine Transporteinrichtung vorgesehen sein, die die Sendung von einem Lagerort aus in Richtung des Aufnahmebehälters oder bis in den Aufnahmebehälter fördert. Es kann auch wenigstens eine Transporteinrichtung vorgesehen sein, die die Sendung, bedarfsweise von dem Aufnahmebehälter in den Lagerort der Sendung im Fahrzeug transportiert. Es kann folglich alternativ oder zusätzlich auch wenigstens eine Transporteinrichtung zum Einbringen der Sendung in den Aufnahmebehälter und/oder zum Herausnehmen der Sendung aus dem Aufnahmebehälter vorgesehen sein. Im Übrigen kann wenigstens eine Transporteinrichtung zum Transport des Aufnahmebehälters von einer Halterung des Aufnahmebehälters zum Fahrzeug und zurück vorgesehen sein, um die Sendung an oder in dem Fahrzeug in den Aufnahmebehälter einzubringen und/oder an oder in dem Fahrzeug aus dem Aufnahmebehälter zu entnehmen.

Die Erfindung wird nachfolgend anhand einer lediglich ein Ausführungsbeispiel darstellenden Zeichnung näher erläutert. In der Zeichnung zeigt
- Fig. 1: ein erfindungsgemäßes Verfahren in schematischer Darstellung und
- Fig. 2A-D: das Abliefern und das Abholen jeweils einer Sendung mit Hilfe der Übergabeeinrichtung.

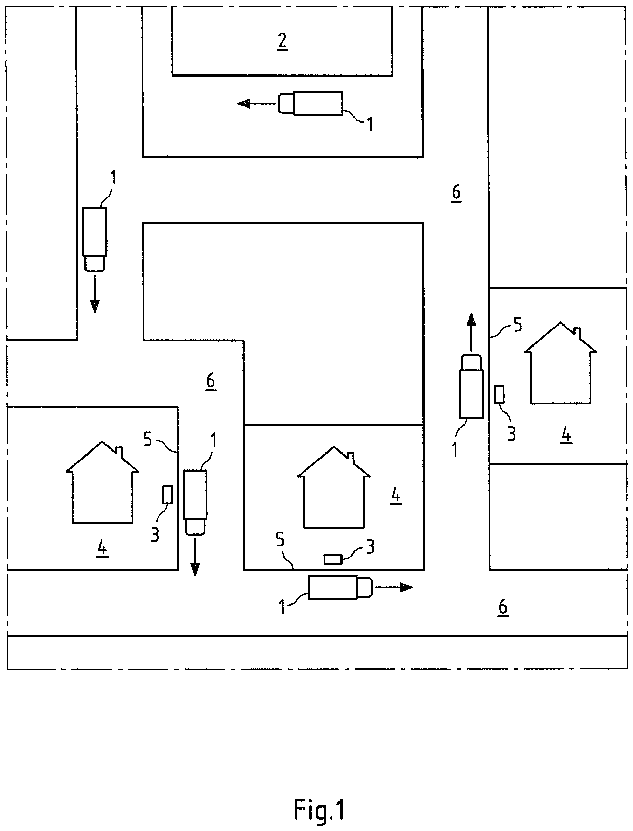

In der Fig. 1 ist schematisch ein Verfahren zum Abliefern insbesondere Zustellen und Abholen von Sendungen, bei einer Reihe von Nutzern mit Hilfe eines Fahrzeugs 1 dargestellt. Das Fahrzeug 1 wird dabei zunächst in einer Sammelstation 2 mit Sendungen beladen, die anschließend bei Nutzern zugestellt werden sollen. Die Sendungen können eine Briefsendung, eine Paketsendung oder ein Flyer sein. Briefsendungen und Flyer werden beim beschriebenen und insoweit bevorzugten Verfahren gebündelt oder gestapelt in einer bestimmten Reihenfolge mitgenommen. Die Briefsendungen und Flyer können vor Ort der Reihe nach, bedarfsweise vom Stapel entnommen werden. Pakete werden wegen der potentiell sehr unterschiedlichen Größen separat im Fahrzeug 1, etwa in einem Regalsystem des Fahrzeugs 1 verstaut. Alternativ könnte die für einen Nutzer bestimmten Briefsendungen und/oder Flyer auch bereits gebündelt im Fahrzeug eingelagert werden.

Das entsprechend mit einer Reihe von Sendungen beladene Fahrzeug 1 fährt nun über öffentliche Straßen der Reihe nach zu den Nutzern, bei denen die Sendungen zugestellt werden sollen. Vorher, hinterher und/oder zwischendurch fährt das Fahrzeug 1 zu weiteren Nutzern, die wenigstens eine Sendung zur Abholung und damit zum Versand zum Empfänger der jeweiligen Sendung bereitgestellt haben. Die Information über die Nutzer, welche wenigstens eine Sendung bereitgestellt haben, die von dem Fahrzeug 1 mitgenommen werden sollen, wird dem Fahrzeug 1 oder dem Fahrer zur Verfügung gestellt. Die Reihenfolge in der das Fahrzeug 1 die Nutzer zum Zustellen und Abholen von Sendungen anfährt, wird in Abhängigkeit des zurückgelegten Wegs und der benötigten Zeit festgelegt, um die Wirtschaftlichkeit des Verfahrens zu verbessern.

Beim dargestellten Verfahren werden in einer Tour nur drei Nutzer bedient, um die Verständlichkeit der schematischen Darstellung zu verbessern. Es können natürlich auch sehr viel mehr Nutzer bedient werden. Die Anzahl der Nutzer ist dabei beispielsweise von der Besiedlungsdichte und der Größe des Fahrzeugs 1 abhängig.

Das Fahrzeug 1 fährt nun ausgehend von der Sammelstation 2 den Aufnahmebehälter 3 des ersten Nutzers auf der Tour an. Das Fahrzeug 1 wird vom Fahrer, also dem Zusteller, in die Nähe des Aufnahmebehälters 3 gefahren, bis der Aufnahmebehälter 3 von wenigstens einem Sensor, in Form einer Kamera erkannt wird. Alternativ könnte das Fahrzeug 1 auch autonom von der Sammelstation 2 zu den Aufnahmebehältern 3 der Nutzer und zurück zu einer Sammelstation, insbesondere der Sammelstation 2 des Ausgangspunkts der Tour, fahren.

Die Aufnahmebehälter 3 der Nutzer befinden sich beim dargestellten und insoweit bevorzugten Verfahren jeweils auf den Grundstücken 4 der Nutzer, und zwar nahe der Grundstücksgrenze 5 angrenzend an eine, insbesondere öffentliche, Straße 6. Die Nähe der Aufnahmebehälter 3 zur Grundstücksgrenze 5 ist dabei so gewählt, dass die Aufnahmebehälter 3 von der Straße 4 oder wenigstens dem Bürgersteig aus mit Hilfe der Übergabeeinrichtung erreicht werden können. In den Fällen, wo ein Grundstück 4 nicht an eine öffentliche Straße 6 grenzt oder ein Aufnahmebehälter 3 auf dem Grundstück 4 nicht zweckmäßig vorgesehen werden kann, können Aufnahmebehälter 3 auch an einem anderen, besser geeigneten Ort vorgesehen werden, die Sendungen müssen dann dort abgeholt oder dort in die Aufnahmebehälter 3 abgelegt werden.

Am Aufnahmebehälter 3 angekommen wird anhand der Daten wenigstens eines Sensors, insbesondere zweier Kameras, die relative Position des Fahrzeugs 1 zum Aufnahmebehälter 3 und/oder die relative Position des Fahrzeugs 1 zu einer vom Fahrzeug 1 einzunehmenden Position ermittelt. Dazu sind beim dargestellten und insoweit bevorzugten Fahrzeug 1 zwei Kameras vorgesehen. Diese entsprechende Information wird nun genutzt, um das Fahrzeug 1 autonom in die vom Fahrzeug 1 einzunehmende Position zu bewegen. Die vom Fahrzeug 1 einzunehmende Position ist dabei vorgegeben. Der Fahrer kann das Annähern des Fahrzeugs 1 an den Aufnahmebehälter 3 bedarfsweise überwachen, um das Fahrzeug 1 anzuhalten, etwa bevor das Fahrzeug 1 mit einem vom Fahrzeug 1 nicht erkannten Hindernis kollidiert. Um Kollisionen mit Hindernissen zu vermeiden, kann das Fahrzeug 1 mit wenigstens einem weiteren Sensor, etwa einem den Abstand zu potentiellen Hindernissen ermittelnden Sensor, ausgerüstet sein.

Ist die vorgegebene räumliche Beziehung zwischen dem Fahrzeug 1 und dem Aufnahmebehälter 3 erreicht, hält das Fahrzeug 1 an. Nun kann automatisch oder initiiert durch eine Auslösehandlung seitens des Zustellers, etwa durch Drücken eines Tasters, die Übergabeeinrichtung aktiviert werden. Beim dargestellten und insoweit bevorzugten Verfahren fährt eine zur Übergabeeinrichtung zählende Übergabeeinheit in Form eines Greifers aus dem Fahrzeug 1 aus, um den in einer Halterung des Aufnahmebehälters 3 aufgenommenen Aufnahmebehälter 3 zu ergreifen. Dazu weist die Übergabeeinrichtung wenigstens einen Sensor auf, der die relative Position des Aufnahmebehälters 3 in Bezug auf die Übergabeeinrichtung, insbesondere des Greifers, erfasst. Dies bedeutet wenigstens die Erfassung der Richtung in der sich der Aufnahmebehälter 3 relativ zur Übergabeeinrichtung, insbesondere zum Greifer, befindet. Es kann aber bedarfsweise, gegebenenfalls mit einem weiteren Sensor, die Entfernung zwischen der Übergabeeinrichtung, insbesondere dem Greifer, und dem Aufnahmebehälter 3 ermittelt werden. Bedarfsweise werden die Informationen hinsichtlich der Richtung der Entfernung des Aufnahmebehälters 3 vom Greifer mit Hilfe von zwei Kameras ermittelt. Der Greifer kann jedenfalls anhand der Positionsangaben mittels einer Steuereinrichtung so gesteuert werden, dass der Greifer autonom, also ohne Zutun des Zustellers, den Aufnahmebehälter 3 ergreifen kann.

Der Greifer betätigt dabei einen Schließmechanismus und bringt diesen in eine geöffnete Stellung, in der der Schließmechanismus einen Verriegelungsmechanismus freigibt. Der Greifer weist dabei seine Autorisierung nach, den Schließmechanismus zu betätigen. Der Greifer bringt dabei gleichzeitig oder anschließend den Verriegelungsmechanismus in eine geöffnete Stellung, in der die Verriegelung zwischen der Halterung des Aufnahmebehälters 3 und dem Aufnahmebehälter aufgehoben ist.

Anschließend wird der Aufnahmebehälter vom Greifer in das Fahrzeug 1 gezogen. Dort - wenn nicht schon vorher - wird von der Öffnungseinheit der Übergabeeinrichtung ein Schließmechanismus des Aufnahmebehälters 3 betätigt und in den geöffneten Zustand gebracht. Bedarfsweise wird dabei vorab eine Autorisierung durchgeführt, die das Öffnen des Schließmechanismus des Aufnahmebehälters 3 erlaubt. Bei geöffnetem Schließmechanismus kann ein Verschlussmittel in Form einer Klappe oder Türe des Aufnahmebehälters 3 geöffnet werden. Dies erfolgt innerhalb des Fahrzeugs 1 mittels einer Öffnungseinheit der Übergabeeinrichtung, um die Sendungen vor Witterungseinflüssen zu schützen. Über das geöffnete Verschlussmittel ist die Zugangseinheit in Form einer Öffnung freigegeben für das Einbringen der Sendung in den Aufnahmebehälter 3.

In den geöffneten Aufnahmebehälter 3 werden nun Sendungen eingebracht. Die Sendungen werden dabei aus einem Lager im Fahrzeug 1 entnommen. Welche Sendungen aus dem Fahrzeug 1 entnommen werden müssen, ist durch die Reihenfolge der anzufahrenden Aufnahmebehälter 3 festgelegt. Die beim ersten Nutzer zuzustellende Sendung besteht aus zwei Briefsendungen und einer Paketsendung. Die Briefsendungen sind durch ein die Briefe einfassendes Band gebündelt und separat zu dem Paket im Fahrzeug 1 gelagert. Die gebündelten Briefe und das Paket werden über einen zur Übergabeeinrichtung zählenden Fördermechanismus, beispielweise umfassend ein Rollenförderband, separat in den geöffneten Aufnahmebehälter 3 eingebracht. Anschließend wird die Türe des Aufnahmebehälters 3 durch die Schließeinheit der Übergabeeinrichtung wieder geschlossen und durch den Schließmechanismus verriegelt. Sodann wird der Aufnahmebehälter 3 mit dem Greifer aus dem Fahrzeug 1 in die Halterung des Aufnahmebehälters 3 zurück verbracht. Der Greifer kann nun wieder in das Fahrzeug 1 eingezogen werden, woraufhin das Fahrzeug 1 zum nächsten Aufnahmebehälter 3 fährt.

Die von der Übergabeeinrichtung durchgeführten Schritte zur Zustellung der Sendung beim Nutzer werden durch die Steuereinrichtung nach vorgegeben Kriterien gesteuert. Eine unmittelbare und ausschließliche Steuerung durch den Fahrer ist daher entbehrlich, was insgesamt zu einer Vereinfachung des Verfahrens führt.

Nahe des Aufnahmebehälters 3 des zweiten Nutzers erfolgt erneut und in der bereits beschriebenen Weise mittels des wenigstens einen Sensors eine Erkennung des Aufnahmebehälters 3, sowie die Ermittlung der Richtung des Aufnahmebehälters 3 in Bezug auf das Fahrzeug 1 und die Ermittlung der Entfernung des Aufnahmebehälters 3 in Bezug auf das Fahrzeug 1. Über die entsprechenden Informationen, die wiederholt bestimmt werden, wird das Fahrzeug 1 so gesteuert, dass es sich in einer vorbestimmten Weise zum Aufnahmebehälter 3 ausrichtet. Anschließend wird der Aufnahmebehälter 3 sensorgestützt und über die Steuereinrichtung gesteuert aus seiner Halterung entnommen, wie dies zuvor bereits beschrieben worden ist. Auch das Öffnen und das Schließen des Aufnahmebehälters 3 erfolgt in der zuvor beschriebenen Weise.

Im Unterschied zu dem Aufnahmebehälter 3 des ersten Nutzers wird dem Aufnahmebehälter 3 des zweiten Nutzers jedoch keine Sendung übergeben, sondern es wird dem Aufnahmebehälter 3 eine bereitgestellte Paketsendung entnommen, um diese zum Empfänger der Sendung zu versenden. Die Information, dass in dem entsprechenden Aufnahmebehälter 3 eine Sendung zur Abholung bereit liegt, ist von dem zweiten Nutzer an das beteiligte Unternehmen übermittelt worden, das die entsprechende Information an den Fahrer und/oder an das Fahrzeug 1 weitergeleitet hat. Alternativ oder zusätzlich hält der Aufnahmebehälter die Information darüber bereit, ob eine Sendung im Aufnahmebehälter bereitliegt. Die Information kann von Fahrer und/oder von einem Sensor erfasst werden. Die Information kann dabei elektrisch oder optisch erkennbar sein. Beispielsweise kann ein RFID-Chip die Information über eine bereitgehaltene Sendung bereitstellen und bedarfsweise von der Übergabeeinrichtung ausgelesen werden. Es kann aber auch ein Anzeigemittel, etwa in Form eines Wimpels, eines Fingers und/oder einer farbigen Markierung, am Aufnahmebehälter angebracht und/oder in eine bestimmte Stellung gebracht werden. Das Anzeigemittel kann so anzeigen, dass eine Sendung zur Abholung bereitliegt. Das Entnehmen der Sendung aus dem Aufnahmebehälter 3 erfolgt, indem der Aufnahmebehälter 3 im Fahrzeug gekippt wird, so dass die Sendung aus dem Aufnahmebehälter 3 heraus auf eine Transporteinrichtung der Übergabeeinrichtung fällt. Die Transporteinrichtung übernimmt den Transport der Sendung an eine Stelle im Fahrzeug 1, indem die Sendung bis zur Rückkehr des Fahrzeugs 1 zur Sammelstation 2 gelagert wird. Anschließend wird der Aufnahmebehälter 3 wieder zurückgedreht und auf die beschriebene Weise verschlossen sowie zurück in die Halterung des Aufnahmebehälters 3 gebracht.

Anschließend fährt das Fahrzeug 1 einen Aufnahmebehälter 3 des dritten Nutzers an. Die Annäherung des Fahrzeugs 1 und des Greifers an den Aufnahmebehälter 3 erfolgt wie zuvor bereits beschrieben. Gleiches gilt für das Überführen des Aufnahmebehälters 3 in das Fahrzeug 1 sowie das Öffnen des Aufnahmebehälters 3. Da bekannt ist, dass in dem entsprechenden Aufnahmebehälter 3 eine Sendung zur Abholung bereit liegt und dass zwei Paketsendungen zwecks Zustellung in den Aufnahmebehälter 3 eingebracht werden sollen, wird der Aufnahmebehälter 3 zunächst gekippt, um die abzuholende Sendung auszuwerfen und über die Transporteinrichtung in einen Lagerbereich des Fahrzeugs 1 zu transportieren. Anschließend wird der Aufnahmebehälter 3 wieder aufgerichtet und eine Transporteinrichtung zur Übergabe der Sendungen aus dem Fahrzeug 1 in den Aufnahmebehälter 3 aktiviert. Die Sendungen sind gemeinsam in einem Fach eines Regalsystems des Fahrzeugs 1 gelagert und werden gemeinsam aus diesem Fach ausgeworfen. Über ein Rollenförderband werden die Sendungen dann in den Aufnahmebehälter 3 überführt.

Der Aufnahmebehälter 3 wird nun in der beschriebenen Weise verschlossen und zurück in die Halterung des Aufnahmebehälters 3 verbracht. Anschließend fährt das Fahrzeug 1 zurück in die Sammelstation 2, wo die von den Nutzern bereitgestellten und vom Fahrzeug 1 abgeholten Sendungen aus dem Fahrzeug 1 entladen werden. Zudem wird das Fahrzeug 1 mit den auf der nächsten Tour des Fahrzeugs 1 zuzustellenden Sendungen beladen, und zwar bevorzugt am nächsten Tag. Sodann kann das Fahrzeug 1 eine weitere Tour fahren, die der zuvor beschriebenen Tour ähneln kann.

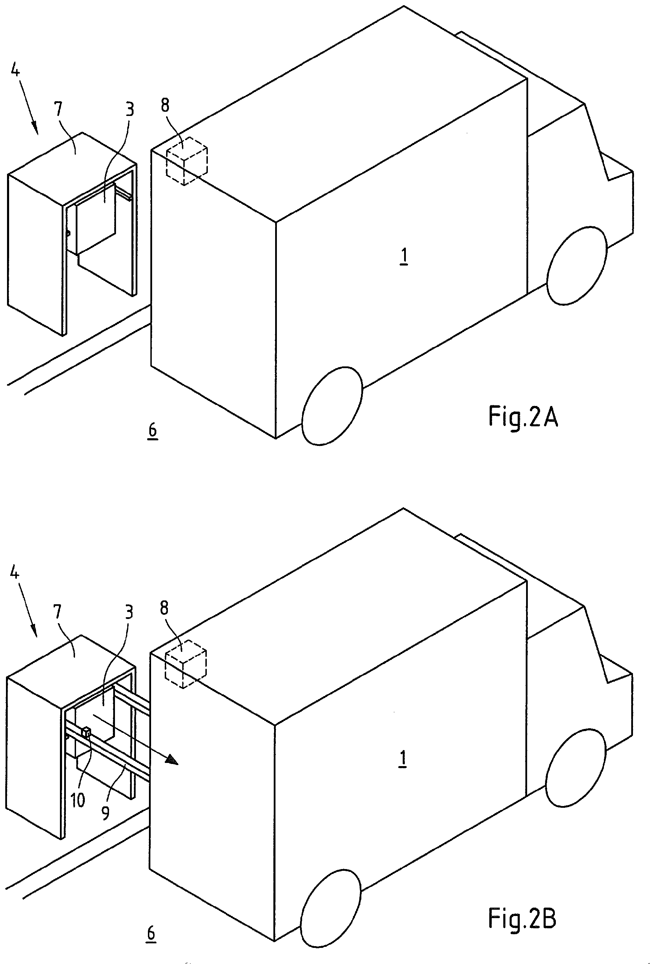

In den Fig. 2A-D ist ein Teil des zuvor beschriebenen Verfahrens näher dargestellt. Das Fahrzeug 1 nähert sich wie in der Fig. 2A dargestellt einem in einer U-förmig ausgebildeten Halterung 7 bereitgehaltenen Aufnahmebehälter 3. Nun wird von dem das Fahrzeug 1 fahrenden Zusteller eine Annäherungseinrichtung aktiviert. Diese umfasst wenigstens einen Sensor 8, in Form zweier Kameras, die den Aufnahmebehälter 3 bzw. die Halterung 7 des Aufnahmebehälters 3 erkennen, sowie die Richtung und Entfernung des Fahrzeugs 1 vom Aufnahmebehälter 3 ermitteln. Anhand dieser Daten bewegt die Annäherungseinrichtung das Fahrzeug 1 zu einer Position, die vorgegebenen Kriterien an die Ausrichtung und Distanz jeweils von Fahrzeug 1 und Aufnahmebehälter 3 entspricht. Dies erfolgt vorzugsweise autonom, also ohne Zutun des Zustellers, der lediglich überwachend oder korrigierend eingreift.

In der Fig. 2B ist dargestellt, dass aus dem Fahrzeug 1 ein Greifarm 9 einer mit dem Fahrzeug 1 fest verbundenen Übergabeeinrichtung ausfährt, den Aufnahmebehälter 3 ergreift und in das Fahrzeug 1 transportiert. Dazu ist die Übergabeeinrichtung mit wenigstens einem Sensor 10 ausgestattet, um die Entfernung und die Richtung jeweils zwischen der Übergabeeinrichtung und dem Aufnahmebehälter 3 zu ermitteln, damit der Aufnahmebehälter 3 sicher ergriffen werden kann. Der wenigstens eine Sensor 10 ist auch in diesem Falle als zwei Kameras ausgebildet. Die Übergabeeinrichtung öffnet den Aufnahmebehälter 3 mit Hilfe einer Öffnungseinheit.

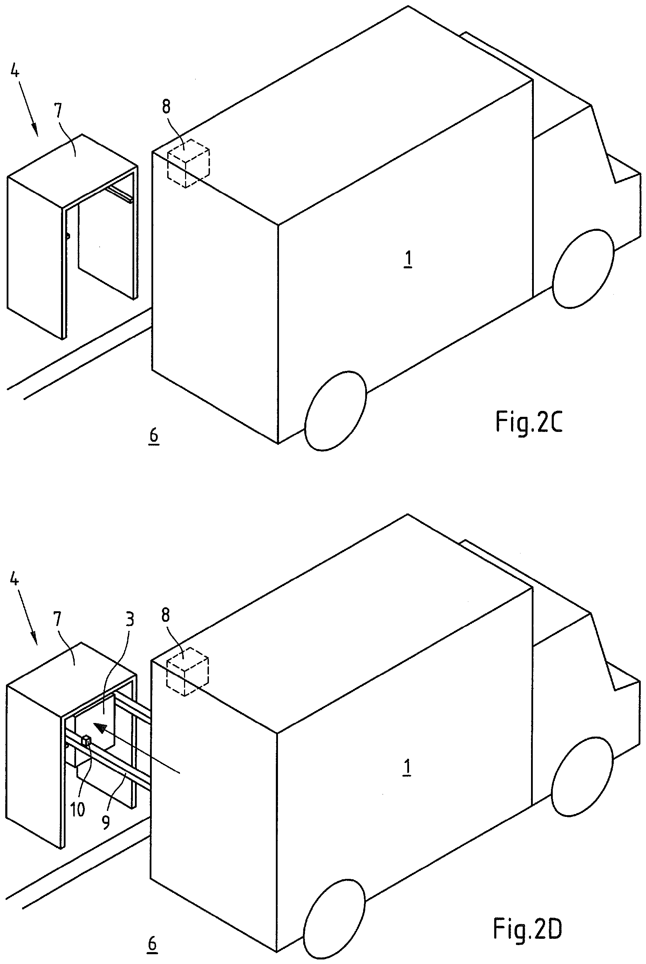

Während sich gemäß Fig. 2C der Aufnahmebehälter 3 im Fahrzeug 1 befindet, wird - soweit erforderlich - eine Sendung aus dem Aufnahmebehälter 3 entnommen und an einen Lagerort im Fahrzeug 1 transportiert. Zudem kann von einem Lagerort im Fahrzeug 1 eine Sendung in den Aufnahmebehälter 3 transportiert werden. Eine Schließeinheit der Übergabeeinheit schließt den Aufnahmebehälter 3.

Anschließend wird der Aufnahmebehälter 3 mit dem Greifarm 9 zurück zur Halterung 7 des Aufnahmebehälters 3 befördert und an die Halterung 7 des Aufnahmebehälters 3 übergeben, wie dies in der Fig. 2D dargestellt ist. Dies erfolgt wiederum anhand der Richtungs- und Distanzinformationen des wenigstens einen Sensors 10 am Greifarm 9. Der Greifarm 9 fährt sodann wieder in das Fahrzeug 1 ein, so dass das Fahrzeug 1 zum Aufnahmebehälter 3 des nächsten Nutzers fahren kann. Das Entnehmen des Aufnahmebehälters 3 von der Halterung 7 des Aufnahmebehälters 3 mit dem Greifarm 9, das bedarfsweise Entnehmen der Sendung aus dem Aufnahmebehälter 3, das bedarfsweise Einbringen der Sendung in den Aufnahmebehälter 3 und das Übergeben des Aufnahmebehälters 3 an die Halterung 7 des Aufnahmebehälters 3 wird durch eine Steuereinrichtung nach vorgegeben Kriterien und bedarfsweise anhand von durch wenigstens einen Sensor 8,10 ermittelten Information gesteuert. Dies erfolgt insoweit vorzugsweise autonom.

## Patentansprüche

1. Verfahren zum Abliefern und/oder Abholen von wenigstens einer Sendung,
- bei dem ein Fahrzeug (1) wenigstens einen Aufnahmebehälter (3) wenigstens teilweise über den öffentlichen Straßenverkehr anfährt und
- bei dem die wenigstens eine abzuliefernde Sendung durch eine mit dem Fahrzeug (1) verbundene Übergabeeinrichtung vom Fahrzeug (1) in den Aufnahmebehälter (3) eingebracht wird und/oder die wenigstens eine abzuholende Sendung durch die mit dem Fahrzeug (1) verbundene Übergabeeinrichtung aus dem Aufnahmebehälter (3) zum Fahrzeug (1) verbracht wird, **dadurch gekennzeichnet, dass**:
- die Übergabeeinrichtung den Aufnahmebehälter (3) von, insbesondere aus, einer Halterung (7) des Aufnahmebehälters entnimmt und wenigstens teilweise in des Fahrzeug (1) befördert und
- die Sendung im wenigstens teilweise im Fahrzeug (1) befindlichen Zustand des Aufnahmebehälters (3) in den Aufnahmebehälter (3) eingebracht und/oder aus dem Aufnahmebehälter (3) entnommen wird.

2. Verfahren nach Anspruch 1,
- bei dem die Sendung durch die Übergabeeinrichtung aus dem Fahrzeug (1) in den Aufnahmebehälter (3) eingebracht wird und/oder
- bei dem die Sendung durch die Übergabeeinrichtung aus dem Aufnahmebehälter (3) in das Fahrzeug (1) verbracht.

3. Verfahren nach Anspruch 1 oder 2,
- bei dem das Fahrzeug (1) einen auf dem Rand eines Grundstücks angrenzend zu einer Straße (6) vorgesehenen Aufnahmebehälter (3) anfährt und/oder
- bei dem das Fahrzeug (1) angrenzend zum Grundstück (4), insbesondere am Straßenrand, hält.

4. Verfahren nach einem der Ansprüche 1 bis 3,
- bei dem das Einbringen der Sendung vom, insbesondere aus dem, Fahrzeug (1) in den Aufnahmebehälter (3) mittels der Übergabeeinrichtung und/oder das Verbringen der Sendung aus dem Aufnahmebehälter (3) zum, insbesondere in das, Fahrzeug mittels der Übergabeeinrichtung wenigstens teilweise durch eine Steuereinrichtung gesteuert wird und/oder
- bei dem das Einbringen der Sendung vom, insbesondere aus dem, Fahrzeug (1) in den Aufnahmebehälter (3) mittels der Übergabeeinrichtung und/oder das Verbringen der Sendung aus dem Aufnahmebehälter (3) zum, insbesondere in das, Fahrzeug (1) mittels der Übergabeeinrichtung wenigstens teilweise autonom durchgeführt wird und/oder
- bei dem das Einbringen der Sendung vom, insbesondere aus dem, Fahrzeug (1) in den Aufnahmebehälter (3) mittels der Übergabeeinrichtung und/oder das Verbringen der Sendung aus dem Aufnahmebehälter (3) zum, insbesondere in das, Fahrzeug (1) mittels der Übergabeeinrichtung wenigstens teilweise nach vorgegebenen Kriterien gesteuert wird.

5. Verfahren nach einem der Ansprüche 1 bis 4,
- bei dem wenigstens ein Sensor (8) die Position des Aufnahmebehälters (3) relativ zum Fahrzeug (1) erfasst und
- bei dem das Fahrzeug (1), vorzugsweise autonom, abhängig von der erfassten Position des Aufnahmebehälters (3) relativ zum Fahrzeug (1) in vorbestimmter Weise zum Aufnahmebehälter (3) positioniert wird und, vorzugsweise,
- bei dem einem Fahrer des Fahrzeugs (1) Informationen betreffend die Position des Aufnahmebehälters (3) relativ zum Fahrzeug (1) angezeigt werden.

6. Verfahren nach einem der Ansprüche 1 bis 5,
- bei dem wenigstens ein Sensor (10) die Position des Aufnahmebehälters (3) relativ zur Übergabeeinrichtung erfasst und
- bei dem die Übergabeeinrichtung, vorzugsweise autonom, abhängig von der erfassten Position des Aufnahmebehälters (3) relativ zur Übergabeeinrichtung zum Einbringen der Sendung vom, insbesondere aus dem, Fahrzeug in den Aufnahmebehälter (3) und/oder zum Verbringen der Sendung aus dem Aufnahmebehälter (3) zum, insbesondere in das, Fahrzeug (1) gesteuert wird.

7. Verfahren nach einem der Ansprüche 1 bis 6,
- bei dem die Sendung unter Ausnutzen der Schwerkraft, vorzugsweise über wenigstens ein Rollenförderband und/oder eine Rutsche, in den Aufnahmebehälter (3) eingebracht und/oder aus dem Aufnahmebehälter (3) in das Fahrzeug (1) verbracht wird und/oder
- bei dem wenigstens ein Greifarm der Übergabeeinrichtung (9) zum Ergreifen des Aufnahmebehälters (3), zum Transport des Aufnahmebehälters (3) zum Fahrzeug (1), zum Transport des Aufnahmebehälters (3) zu einer Halterung (7) des Aufnahmebehälters, zum Einbringen der Sendung in den Aufnahmebehälter (3), zum Entnehmen der Sendung aus dem Aufnahmebehälter (3), zum Ergreifen der im Fahrzeug (1) bereitgestellten Sendung und/oder zum Ablegen der aus dem Aufnahmebehälter (3) entnommenen Sendung im Fahrzeug (1) verwendet wird.

8. Verfahren nach einem der Ansprüche 1 bis 7,
- bei dem die wenigstens eine Sendung von oben, von vorne, von hinten und/oder von der Seite in den Aufnahmebehälter (3) eingebracht wird und/oder
- bei dem die Sendung dem Aufnahmebehälter (3) von oben, von vorne, von hinten, von der Seite und/oder von unten entnommen wird und/oder
- bei dem die Sendung durch eine Zugangseinheit, insbesondere Öffnung, vorzugsweise mit Abmessungen von wenigstens 10 cm, insbesondere wenigstens 20 cm, in den Aufnahmebehälter (3) eingebracht und/oder aus dem Aufnahmebehälter (3) entnommen wird.

9. Verfahren nach einem der Ansprüche 1 bis 8,
- bei dem der Aufnahmebehälter (3), insbesondere ein Verschlussmittel zum Verschließen einer Zugangseinheit, von einer Öffnungseinheit, vorzugsweise der Übergabeeinrichtung, für die Ablieferung und/oder Abholung der Sendung geöffnet wird und/oder
- bei dem der Aufnahmebehälter (3), insbesondere ein Verschlussmittel zum Verschließen einer Zugangseinheit, nach dem Anliefern und/oder dem Abholen der Sendung von einer Schließeinheit, vorzugsweise der Übergabeeinrichtung, geschlossen wird und/oder
- bei dem von der Übergabeeinrichtung ein Schließmechanismus zum Verriegeln des Verschlussmittels mit dem Aufnahmebehälter (3) und/oder zum Entriegeln des Verschlussmittels vom Aufnahmebehälter (3) betätigt wird.

10. Verfahren nach einem der Ansprüche 1 bis 9,
- bei dem von der Übergabeeinrichtung ein Verriegelungsmechanismus zum Verriegeln des Aufnahmebehälters (3) mit der Halterung (7) des Aufnahmebehälters (3) und/oder zum Entriegeln des Aufnahmebehälters (3) von der Halterung des Aufnahmebehälters (3) betätigt wird und, vorzugsweise,
- bei dem von der Übergabeeinrichtung ein Schließmechanismus zum Verriegeln des Verriegelungsmechanismus und/oder zum Entriegeln des Verriegelungsmechanismus vom Aufnahmebehälter (3) betätigt wird.

11. Verfahren nach einem der Ansprüche 1 bis 10,
- bei dem das Fahrzeug (1), vorzugsweise autonom, von wenigstens einer Sammelstation (2) zum wenigstens einem Aufnahmebehälter (3) und vom wenigstens einen Aufnahmebehälter (3) zu einer, vorzugsweise derselben, Sammelstation (2) fährt und
- bei dem das Fahrzeug (1) in der Sammelstation (2) mit der wenigstens einen abzuliefernden Sendung beladen wird und/oder die wenigstens eine abgeholte Sendung in der Sammelstation (2) vom Fahrzeug (1) entladen wird und, vorzugsweise,
- bei dem die Sendungen in der Sammelstation, im Fahrzeug (1) oder im Aufnahmebehälter (3) zu einer in denselben Aufnahmebehälter (3) einzubringenden Sendungseinheit zusammengebracht werden.

12. Verfahren nach einem der Ansprüche 1 bis 11,
bei dem Sendungen miteinander verbunden werden und/oder in einer Transporteinheit, vorzugsweise variabler Größe, zusammengebracht werden.

13. Verfahren nach einem der Ansprüche 1 bis 12,
- bei dem mehrere Sendungen abgeliefert und/oder abgeholt werden,
- bei dem ein Fahrzeug (1) nacheinander mehrere Aufnahmebehälter (3) wenigstens teilweise über den öffentlichen Straßenverkehr anfährt und
- bei dem durch eine mit dem Fahrzeug (1) verbundene Übergabeeinrichtung wenigstens eine Sendung vom, insbesondere aus dem, Fahrzeug (1) in wenigstens einen Aufnahmebehälter (3) eingebracht wird und/oder durch die mit dem Fahrzeug (1) verbundene Übergabeeinrichtung wenigstens eine Sendung aus dem wenigstens einen Aufnahmebehälter (3) zum, insbesondere in das, Fahrzeug (1) verbracht wird.

14. Verfahren nach Anspruch 13,
- bei dem das Fahrzeug (1) in Abhängigkeit von der geplanten Reihenfolge der anzufahrenden Aufnahmebehälter (3) mit Sendungen beladen wird und/oder
- bei dem die Reihenfolge der angefahrenen Aufnahmebehälter (3) von der geplanten Reihenfolge der anzufahrenden Aufnahmebehälter (3) abweicht.

## Claims

1. Method for delivering and/or collecting of at least one mailing,
- in which a vehicle (1) drives to at least one receptacle (3) through public traffic at least in part and
- in which the at least one mailing to be delivered is taken from the vehicle (1) and placed into the receptacle (3) by a transfer device attached to the vehicle (1) and/or the at least one mailing to be collected is brought from the receptacle (3) to the vehicle (1) by the transfer device attached to the vehicle (1),
**characterized in that**
- the transfer device removes the receptacle (3) from, in particular out of, a holder (7) of the receptacle and conveys it into the vehicle (1) at least in part and
- the mailing is placed into the receptacle (3) and/or removed from the receptacle (3) when said receptacle (3) is located in the vehicle (1) at least in part.

2. Method according to claim 1,
- in which the mailing is taken from the vehicle (1) and placed into the receptacle (3) by the transfer device and/or
- in which the mailing is brought from the receptacle (3) into the vehicle (1) by the transfer device.

3. Method according to claim 1 or 2,
- in which the vehicle (1) drives to a receptacle (3) provided on the edge of a property adjacent to a road (6) and/or
- in which the vehicle (1) stops adjacent to the property (4), in particular at the kerbside.

4. Method according to any one of claims 1 to 3,
- in which the taking of the mailing from, more particularly out of, the vehicle (1) and placing the mailing into the receptacle (3) by means of the transfer device and/or the bringing of the mailing from the receptacle (3) to, more particularly into, the vehicle by means of the transfer device is controlled by a control device at least in part and/or
- in which the taking of the mailing from, more particularly out of, the vehicle (1) and placing the mailing into the receptacle (3) by means of the transfer device and/or the bringing of the mailing from the receptacle (3) to, more particularly into, the vehicle (1) by means of the transfer device is performed autonomously at least in part and/or
- in which the taking of the mailing from, more particularly out of, the vehicle (1) and placing the mailing into the receptacle (3) by means of the transfer device and/or the bringing of the mailing from the receptacle (3) to, more particularly into, the vehicle (1) by means of the transfer device is controlled according to predefined criteria at least in part.

5. Method according to any one of claims 1 to 4,
- in which at least one sensor (8) determines the position of the receptacle (3) relative to the vehicle (1) and
- in which the vehicle (1), preferably autonomously, depending on the determined position of the receptacle (3), relative to the vehicle (1), is positioned relative to the receptacle (3) in a predefined manner and, preferably,
- in which information concerning the position of the receptacle (3) relative to the vehicle (1) is displayed to a driver of the vehicle (1).

6. Method according to any one of claims 1 to 5,
- in which at least one sensor (10) determines the position of the receptacle (3) relative to the transfer device and
- in which the transfer device is controlled, preferably autonomously, depending on the determined position of the receptacle (3) relative to the transfer device, in order to take the mailing from, more particularly out of, the vehicle and place it into the receptacle (3) and/or to bring the mailing from the receptacle (3) to, more particularly into, the vehicle (1).

7. Method according to any one of claims 1 to 6,
- in which the mailing making use of gravity, preferably by means of at least one roller conveyor and/or a slide, is placed into the receptacle (3) and/or brought from the receptacle (3) into the vehicle (1) and/or
- in which at least one gripper arm of the transfer device (9) is used to grab the receptacle (3), to transport the receptacle (3) to the vehicle (1), to transport the receptacle (3) to a holder (7) of the receptacle, to place the mailing into the receptacle (3), to remove the mailing from the receptacle (3), to grab the mailing provided in the vehicle (1) and/or to deposit the mailing removed from the receptacle (3) in the vehicle (1).

8. Method according to any one of claims 1 to 7,
- in which the at least one mailing is placed into the receptacle (3) from above, from in front, from behind and/or from the side and/or
- in which the mailing is removed from the receptacle (3) from above, from the front, from behind, from the side and/or from below, and/or
- in which the mailing is placed into the receptacle (3) and/or removed from the receptacle (3) through an access unit, more particularly opening, preferably having dimensions of at least 10 cm, more particularly at least 20 cm.

9. Method according to any one of claims 1 to 8,
- in which the receptacle (3), more particularly a closing means for closing an access unit, is opened by an opening unit, preferably the transfer device, for delivery and/or collection of the mailing, and/or
- in which the receptacle (3), more particularly a closing means for closing an access unit, is closed by a closing unit, preferably the transfer device, after the delivery and/or collection of the mailing, and/or
- in which a closing mechanism to lock the closing means to the receptacle (3) and/or to unlock the closing means from the receptacle (3) is activated by the transfer device.

10. Method according to any one of claims 1 to 9,
- in which a locking mechanism to lock the receptacle (3) to the holder (7) of the receptacle (3) and/or to unlock the receptacle (3) from the holder of the receptacle (3) is activated by the transfer device and, preferably,
- in which a closing mechanism to lock the locking mechanism and/or to unlock the locking mechanism from the receptacle (3) is activated by the transfer device.

11. Method according to any one of claims 1 to 10,
- in which the vehicle (1) drives, preferably autonomously, from at least one collection depot (2) to the at least one receptacle (3) and from the at least one receptacle (3) to a, preferably the same, collection depot (2) and
- in which the vehicle (1) is loaded with the at least one mailing to be delivered at the collection depot (2) and/or the at least one mailing that has been collected is unloaded from the vehicle (1) at the collection depot (2), and, particularly,
- in which the mailings at the collection depot, in the vehicle (1) or in the receptacle (3) are combined into one mailing unit to be placed into the same receptacle (3).

12. Method according to any one of claims 1 to 11,
in which mailings are attached to each other and/or combined in a transport unit, preferably of variable size.

13. Method according to any one of claims 1 to 12,
- in which several mailings are delivered and/or collected,
- in which a vehicle (1) drives to several receptacles (3) one alter the other through public traffic at least in part and
- in which at least one mailing is taken from, more particularly out of, the vehicle (1) and placed into at least one receptacle (3) by a transfer device attached to the vehicle (1) and/or at least one mailing is brought from the at least one receptacle (3) to, more particularly into, the vehicle (1) by the transfer device attached to the vehicle (1).

14. Method according to claim 13,
- in which the vehicle (1) is loaded with mailings in accordance with the scheduled order of receptacles (3) to be visited and/or
- in which the order of receptacles (3) visited differs from the scheduled order of receptacles (3) to be visited.

## Revendications

1. Procédé de livraison et/ou de ramassage d'au moins un envoi,
- dans lequel un véhicule (1) transporte au moins un récipient (3) au moins partiellement sur le trafic routier public et
- dans lequel ledit au moins un envoi à livrer est introduit par un dispositif de remise relié au véhicule (1) du véhicule (1) dans le récipient (3) et/ou ledit au moins un envoi à ramasser est passé, par le dispositif de remise relié au véhicule (1), du récipient (3) au véhicule (1),
**caractérisé en ce que** :
- le dispositif de remise retire le récipient (3) de, en particulier hors d'un support (7) du récipient et le transporte au moins partiellement dans le véhicule (1) et
- l'envoi, dans un état où le récipient (3) se trouve au moins partiellement dans le véhicule (1), est introduit dans le récipient (3) et/ou est retiré du récipient (3).

2. Procédé selon la revendication 1,
- dans lequel l'envoi est introduit par le dispositif de remise hors du véhicule (1) dans le récipient (3) et/ou
- dans lequel l'envoi passe par le dispositif de remise hors du récipient (3) dans le véhicule (1).

3. Procédé selon la revendication 1 ou 2,
- dans lequel le véhicule (1) transporte un récipient (3) prévu sur le bord d'un terrain contigu à une route (6) et/ou
- dans lequel le véhicule (1) s'arrête de manière contigüe à un terrain (4), en particulier sur le bord d'une route.

4. Procédé selon l'une des revendications 1 à 3,
- dans lequel l'introduction de l'envoi du, en particulier hors du, véhicule (1) dans le récipient (3) à l'aide du dispositif de remise et/ou le passage de l'envoi hors du récipient (3) vers, en particulier dans, le véhicule à l'aide du dispositif de remise est commandé au moins partiellement par un dispositif de commande et/ou
- dans lequel l'introduction de l'envoi du, en particulier hors du, véhicule (1) dans le récipient (3) à l'aide du dispositif de remise et/ou le passage de l'envoi hors du récipient (3) vers, en particulier dans, le véhicule (1) à l'aide du dispositif de remise est réalisé au moins partiellement de manière autonome et/ou
- dans lequel l'introduction de l'envoi du, en particulier hors du véhicule (1) dans le récipient (3) à l'aide du dispositif de remise et/ou le passage de l'envoi hors du récipient (3) vers, en particulier dans le véhicule (1) à l'aide du dispositif de remise est commandé au moins partiellement selon des critères prédéfinis.

5. Procédé selon l'une des revendications 1 à 4,
- dans lequel au moins un capteur (8) détecte la position du récipient (3) par rapport au véhicule (1) et
- dans lequel le véhicule (1) est positionné de préférence de manière autonome en fonction de la position détectée du récipient (3) par rapport au véhicule (1) de manière prédéterminée par rapport au récipient (3) et de préférence
- dans lequel des informations concernant la position du récipient (3) par rapport au véhicule (1) sont affichées à un conducteur du véhicule (1).

6. Procédé selon l'une des revendications 1 à 5,
- dans lequel au moins un capteur (10) détecte la position du récipient (3) par rapport au dispositif de remise et
- dans lequel le dispositif de remise est de préférence commandé de manière autonome en fonction de la position détectée du récipient (3) par rapport au dispositif de remise pour l'introduction de l'envoi du, en particulier hors du, véhicule dans le récipient (3) et/ou pour le passage de l'envoi hors du récipient (3) vers, en particulier dans le véhicule (1).

7. Procédé selon l'une des revendications 1 à 6,
- dans lequel l'envoi est passé en utilisant la force de gravité de préférence sur au moins une bande de transport à rouleaux et/ou une glissière, dans le récipient (3) et/ou est passé hors du récipient (3) dans le véhicule (1) et/ou
- dans lequel au moins un bras de préhension du dispositif de remise (9) est utilisé pour la saisie du récipient (3), pour le transport du récipient (3) vers le véhicule (1), pour le transport du récipient (3) vers un support (7) du récipient, pour l'introduction de l'envoi dans le récipient (3), pour le retrait de l'envoi hors du récipient (3), pour la saisie de l'envoi mis à disposition dans le véhicule (1) et/ou pour le dépôt de l'envoi retiré hors du récipient (3) dans le véhicule (1).

8. Procédé selon l'une des revendications 1 à 7,
- dans lequel ledit au moins un envoi est introduit par le haut, par l'avant, par l'arrière et/ou par le côté dans le récipient (3) et/ou
- dans lequel l'envoi est retiré du récipient (3) par le haut, par l'avant, par l'arrière, par le côté et/ou par le bas et/ou
- dans lequel l'envoi est introduit par une unité d'accès, en particulier une ouverture, de préférence avec des dimensions d'au moins 10 cm, en particulier d'au moins 20 cm, dans le récipient (3) et/ou est retiré hors du récipient (3).

9. Procédé selon l'une des revendications 1 à 8,
- dans lequel le récipient (3), en particulier un moyen de fermeture est ouvert pour la fermeture d'une unité d'accès, d'une unité d'ouverture, de préférence du dispositif de remise pour la livraison et/ou le ramassage de l'envoi et/ou
- dans lequel le récipient (3), en particulier un moyen de fermeture est fermé pour la fermeture d'une unité d'accès après la livraison et/ou le ramassage de l'envoi par une unité de fermeture, de préférence le dispositif de remise et/ou
- dans lequel un mécanisme de fermeture pour le verrouillage du moyen de fermeture avec le récipient (3) est actionné par le dispositif de remise et/ou pour le déverrouillage du moyen de fermeture du récipient (3).

10. Procédé selon l'une des revendications 1 à 9,
- dans lequel un mécanisme de verrouillage est actionné par le dispositif de remise pour le verrouillage du récipient (3) avec le support (7) du récipient (3) et/ou pour le déverrouillage du récipient (3) du support du récipient (3) et de préférence
- dans lequel un mécanisme de fermeture est actionné par le dispositif de remise pour le verrouillage du mécanisme de verrouillage et/ou pour le déverrouillage du mécanisme de verrouillage du récipient (3).

11. Procédé selon l'une des revendications 1 à 10,
- dans lequel le véhicule (1) se déplace de préférence de manière autonome d'au moins un poste de collecte (2) à au moins un récipient (3) et d'au moins un récipient (3) à un poste de collecte (2), de préférence le même,
- dans lequel le véhicule (1) est chargé dans le poste de collecte (2) avec ledit au moins un envoi à livrer et/ou ledit au moins un envoi ramassé dans le poste de collecte (2) est déchargé du véhicule (1) et
de préférence
- dans lequel les envois sont réunis dans le poste de collecte, dans le véhicule (1) ou dans le récipient (3) en une unité d'envoi à introduire dans le même récipient (3).

12. Procédé selon l'une des revendications 1 à 11,
où des envois sont reliés entre eux et/ou sont réunis dans une unité de transport, de préférence de grandeur variable.

13. Procédé selon l'une des revendications 1 à 12,
- dans lequel plusieurs envois sont livrés et/ou ramassés,
- dans lequel un véhicule (1) transporte l'un après l'autre plusieurs récipients (3) au moins partiellement sur le trafic routier public et
- dans lequel par un dispositif de remise relié au véhicule (1), au moins un envoi est introduit du, en particulier hors du, véhicule (1) dans au moins un récipient (3) et/ou par le dispositif de remise relié au véhicule (1), au moins un envoi est passé hors de ledit au moins un récipient (3) vers, en particulier dans, le véhicule (1).

14. Procédé selon la revendication 13,
- dans lequel le véhicule (1) est chargé d'envois en fonction de l'ordre planifié des récipients (3) à transporter et/ou
- dans lequel l'ordre des récipients (3) transportés diverge de l'ordre planifié des récipients (3) à transporter.
